# EUROPÄISCHE PATENTANMELDUNG

(11) **EP 4 539 316 A1**
(43) Veröffentlichungstag der Anmeldung: **16.04.2025**
(21) Anmeldenummer: 24204129.1
(22) Anmeldetag: 02.10.2024
(51) Int. Cl.: H02M 1/00, H02M 1/44, H02M 3/335, H02M 7/219

(54) **VERFAHREN ZUR UNTERDRÜCKUNG VON EMV-STÖRUNGEN IN EINER DC-LADESTATION FÜR ELEKTROFAHRZEUGE**

(30) Priorität: 13.10.2023 DE 102023128046
(71) Anmelder: Bender GmbH & Co. KG, 35305 Grünberg (DE)
(72) Erfinder: MÖLL, Winfried, 35321 Laubach (DE)
(74) Vertreter: advotec.

(57) **Zusammenfassung**

Die Erfindung betrifft ein Verfahren zur Unterdrückung von EMV-Störungen in einer DC-Ladestation (2) für Elektrofahrzeuge (8), wobei die DC-Ladestation (2) mindestens eine Stromrichterschaltung (10, 14) mit Halbleiter-Leistungsschaltern (20) aufweist, deren Ansteuerung über ein Pulsmuster mit einer Schaltfrequenz (fₛ) erfolgt. Das erfindungsgemäße Verfahren umfasst die Verfahrensschritte Bereitstellen einer Wechselspannung von einem AC-Stromversorgungssystem (4), Gleichrichten der Wechselspannung in eine DC-Zwischenspannung (12) und Umsetzen der DC-Zwischenspannung (12) in eine DC-Ladespannung (6), wobei die Schaltfrequenz (fₛ) des Pulsmusters (30, 40) zur Ansteuerung der Halbleiter-Leistungsschalter (20) kontinuierlich und zufallsbestimmt variiert wird. Das Verfahren ist in analoger Weise für ein Ladegerät in einem Elektrofahrzeug (8) anwendbar.

## Beschreibung

Die Erfindung betrifft ein Verfahren zur Unterdrückung von EMV-Störungen in einer DC-Ladestation für Elektrofahrzeuge, wobei die DC-Ladestation mindestens eine Stromrichterschaltung mit Halbleiter-Leistungsschaltern aufweist, deren Ansteuerung über ein Pulsmuster mit einer Schaltfrequenz erfolgt. Dabei wird eine Wechselspannung von einem AC-Stromversorgungssystem bereitgestellt, die Wechselspannung in eine DC-Zwischenspannung gleichgerichtet sowie die DC-Zwischenspannung in eine DC-Ladespannung umgesetzt.

Im Zuge der Hinwendung zur Elektromobilität ist eine hinreichend ausgebaute Ladeinfrastruktur erforderlich, mit der die Energiespeicher batterieelektrisch betriebener Elektrofahrzeuge effizient und elektrisch sicher aufgeladen werden können. Im Hinblick auf eine schnelle Aufladung sind daher Ladesysteme konzipiert worden, bei denen der von dem öffentlichen Stromversorgungssystem bereitgestellte Wechselstrom in dem Elektrofahrzeug in einen zur Aufladung der Batterie erforderlichen Gleichstrom umgewandelt wird. Um die Ladezeiten weiter zu verkürzen, ist jedoch eine hohe Ladeleistung mit bis zu 300 kW und darüber hinaus erforderlich, die aufgrund der aufwendigeren Schaltungstechnik nur außerhalb des Fahrzeugs von DC-Ladestationen bereitgestellt werden kann. Die Architektur einer DC-Ladestation weist daher eine (erste) Stromrichterschaltung in Form eines AC/DC-Gleichrichters auf. Diese von dem Gleichrichter erzeugte DC-Zwischenspannung wird in einer weiteren als DC/DC-Wandler (Gleichspannungswandler, Gleichstromsteller) ausgeführten (zweiten) Stromrichterschaltung in eine für die Batterie des zu ladenden Fahrzeugs angepasste DC-Ladespannung in der Größenordnung von wenigen 100 V bis 1000 V umgesetzt.

Die schaltungstechnische Realisierung der Stromrichterschaltungen - des AC/DC-Gleichrichters sowie die des DC/DC-Gleichspannungswandlers - beruht auf einer Halbleiter-Leistungselektronik. Um eine möglichst geringe Restwelligkeit der DC-Ladespannung zu erreichen, ist man bestrebt, die Halbleiter-Leistungsschalter mit einer möglichst hohen Schaltfrequenz und möglichst großer Flankensteilheit zu betreiben, wobei eine Schaltfrequenz mit einer dem Pulsmuster zugrundeliegenden Grundschwingung mit einer Grundfrequenz von 10 kHz bis über 40 kHz dem Stand der Technik entspricht. Ein derartiges, hochfrequentes Pulsmuster zur Ansteuerung der Halbleiter-Leistungsschalter jedoch erhöht die Schaltverluste sowie die EMV-Störstrahlung, trägt aber dazu bei, die Verlustleistung eines vorhandenen Transformators zu reduzieren. Durch hohe Taktung und große Flankensteilheit kann somit die Gesamtverlustleistung gering gehalten werden, allerdings wird dieser Vorteil mit einer erhöhten EMV-Störstrahlung erkauft.

Insbesondere durch die Einführung von Wide-Band-Gap-Halbleitermaterialen, wie Siliziumcarbid (SiC) und Galliumnitrid (GaN), werden zwar bei höheren Schaltfrequenzen ebenfalls die Schaltverluste reduziert, jedoch können Störfrequenzanteile zu erheblichen EMV-Störungen führen, die über die Ladeeinrichtung selbst und das Anschlusskabel übertragen werden.

Aus dem Stand der Technik sind im Bereich der Schaltnetzteile Maßnahmen bekannt, um diese EMV-Störungen zu reduzieren. So werden aktive und passive Filter eingesetzt, die den Störpegel durch Umwandeln der Störenergie in Wärme senken. Je nach Störgrad jedoch ist der Entstöraufwand sehr hoch und führt damit zu einem verringerten Wirkungsgrad der Leistungselektronik.

Der vorliegenden Erfindung liegt somit die Aufgabe zugrunde, ein Verfahren zur Verminderung von EMV-Störungen in einer DC-Ladestation für Elektrofahrzeuge zu entwickeln, welches zudem die Effizienz der Bereitstellung einer DC-Ladespannung erhöht und kostengünstig implementierbar ist.

Diese Aufgabe wird in Verbindung mit den Merkmalen des Oberbegriffs in Anspruch 1 dadurch gelöst, dass die Schaltfrequenz des Pulsmusters zur Ansteuerung der Halbleiter-Leistungsschalter kontinuierlich und zufallsbestimmt variiert wird.

Die Ansteuerung der Halbleiter-Leistungsschalter erfolgt über ein Pulsmuster, welches aus einer Rechteck-Impulsfolge besteht, die eine Grundschwingung (erste Harmonische) aufweist, deren Frequenz (Grundfrequenz) der Schaltfrequenz entspricht. Das Pulsmuster ist somit ein periodisches Signal mit einer Schaltperiode (Kehrwert der Schaltfrequenz) und weist als Ergebnis einer Fourier-Analyse ein Linienspektrum auf. Das Linienspektrum der Rechteck-Impulsfolge mit konstanter Schaltperiode zeigt dabei Spektralanteile an ungeradzahligen Vielfachen der Grundfrequenz (Fourier-Koeffizienten der Harmonischen). Diese Leistungsspitzen wirken als Störpegel und können somit EMV-Störungen verursachen.

Erfindungsgemäß wird die Schaltfrequenz kontinuierlich und zufallsbestimmt variiert. Aufgrund der Zufälligkeit der Frequenzänderung ergibt sich in der spektralen Betrachtung eine "Verschmierung" der Spektralanteile in Richtung eines gleichförmigeren Leistungsdichtespektrums des so modifizierten Pulsmusters. Dies führt zu einer Reduktion der Störpegel und bewirkt eine größere EMV-Verträglichkeit.

In weiterer Ausgestaltung erfolgt die Variation der Schaltfrequenz durch eine Verlängerung und/oder Verkürzung aufeinanderfolgender Schaltperioden mit einer zufallsbestimmten Verzögerungszeit.

Infolge der kontinuierlichen Veränderung der Periodendauer aufeinanderfolgender Schaltperioden mit einer zufallsbestimmten Verzögerungszeit weist das Pulsmuster keine strenge Periodizität mehr auf. Das auf diese Weise pulsdauermodulierte Pulsmuster zeigt eine bewusst herbeigeführte geringfügige zeitliche Schwankung, wobei der gewünschte Ladestrom im Mittel korrekt eingestellt bleibt.

Aus der Verlängerung (positive Verzögerungszeit) und der Verkürzung (negative Verzögerungszeit) der Schaltperiode resultiert gegenüber der (unmodulierten) Pulsmuster-Grundform eine gleichförmigere Verteilung des Leistungsdichtespektrums, somit eine Reduktion der Leistungsspitzen und damit eine Reduktion des EMV-Störpegels.

Die Verlängerung und Verkürzung der Schaltperiode erfolgt zufallsbestimmt durch eine Addition einer Verzögerungszeit (positive Verzögerung) und/oder Subtraktion einer Verzögerungszeit (negative Verzögerung) zu/von der Schaltperiode des Pulsmusters in unmodulierter Form.

Weiter kann die zufallsbestimmte Verzögerungszeit zur Verlängerung und Verkürzung der Schaltperiode durch einen Zufallsgenerator erzeugt werden.

Um die zur Reduktion der Spitzen des Leistungsdichtespektrums eingeführte Zufälligkeit der Schaltperioden-Verzögerung zu erzielen, wird die für die Verlängerung und Verkürzung der Schaltperiode erforderliche Verzögerungszeit mittels eines Zufallsgenerators bestimmt.

Der Zufallsgenerator ist vorzugsweise als Pseudo-Zufallsgenerator (PN-Generator) realisiert.

Der PN-Generator (Pseudo-Noise-Generator) erzeugt eine zufällige Folge von Wörtern, die jeweils eine - somit zufallsbestimmte - Verzögerungszeit repräsentieren. Tatsächlich ist die Folge aufgrund der begrenzten Speicherkapazität nicht streng zufällig, sondern weist eine Periodizität auf, erfüllt jedoch bei hinreichender Periodenlänge die Eigenschaften einer Zufallsfolge. Dabei wird das Ausmaß der Verminderung der Störstrahlung von der Bandbreite der Variation der Schaltfrequenz und der Periodenlänge der PN-Folge beeinflusst.

Weiterhin kann die Variation der Schaltfrequenz auch mittels eines zufallsgesteuerten digitalen Signalgenerators erfolgen.

Alternativ zu der Variation der Schaltfrequenz durch Addition und/oder Subtraktion der zufallsbestimmten Verzögerungszeit zu/von der Schaltperiode wird ein (Rechteck-)Signalgenerator implementiert, der in Verbindung mit einem Zufallsgenerator die Grundfrequenz der dem Pulsmuster zugrundeliegenden Grundschwingung kontinuierlich und zufallsbestimmt variiert.

Bevorzugt arbeitet der digitale Signalgenerator auf Basis des DDS-Verfahrens.

Zum Erzeugen des periodischen Pulsmusters kann das Verfahren der direkten digitalen Synthese (DDS - Direct Digital Synthesis) angewendet werden. Dieses Verfahren besitzt den Vorteil eines guten dynamischen Verhaltens mit hoher zeitlicher Auflösung, sodass die Grundfrequenz des Pulsmusters auch bei hohen Schaltfrequenzen schnell veränderbar ist.

Mit Vorteil erfolgt eine weitere Anwendung des erfindungsgemäßen Verfahrens in analoger Weise für ein Ladegerät in einem Elektrofahrzeug, wobei das Ladegerät mindestens eine Stromrichterschaltung mit Halbleiter-Leistungsschaltern aufweist, deren Ansteuerung über ein Pulsmuster mit einer Schaltfrequenz erfolgt.

Weist das Elektrofahrzeug ein bordeigenes Ladegerät (On-Board-Charger) auf, welches die von dem AC-Stromversorgungssystem bereitgestellte Wechselspannung in eine DC-Zwischenspannung gleichrichtet und diese dann in eine DC-Ladespannung umsetzt, so kann das erfindungsgemäße Verfahren gleichermaßen in diesem Ladegerät realisiert werden.

Zusammenfassend werden mit dem erfindungsgemäßen Verfahren EMV-Störungen in einer DC-Ladestation oder in einem bordeigenen Ladegerät wirksam unterdrückt, wobei gleichzeitig aufgrund der Entbehrlichkeit von Filtereinrichtungen eine Kosten- und Bauraum-Reduzierung erreicht wird. Bei der Verwendung von SiC- und GaN-Halbleitern mit der Ansteuerung über hochfrequente Pulsmuster können die Verlustleistung sowie die Restwelligkeit der DC-Ladespannung reduziert werden. Eine schaltungstechnisch einfache und auch nachrüstbare Lösung wird durch die Verwendung von auf dem Markt verfügbaren Komponenten (Zufallsgenerator) ermöglicht.

Weitere vorteilhafte Ausgestaltungsmerkmale ergeben sich aus den nachfolgenden Beschreibungen und den Zeichnungen, die eine bevorzugte Ausführungsform der Erfindung anhand von Beispielen erläutern.

Es zeigen:
- **Fig. 1**: eine Architektur eines DC-Ladesystems,
- **Fig. 2**: ein Pulsmuster in Grundform,
- **Fig. 3**: das Fourier-Spektrum der Pulsmuster-Grundform aus Fig. 2,
- **Fig. 4**: ein erfindungsgemäß periodendauermoduliertes Pulsmuster,
- **Fig. 5**: das Fourier-Spektrum des periodendauermodulierten Pulsmusters aus Fig. 4, und
- **Fig. 6**: schematisch die Erzeugung des periodendauermodulierten Pulsmusters.

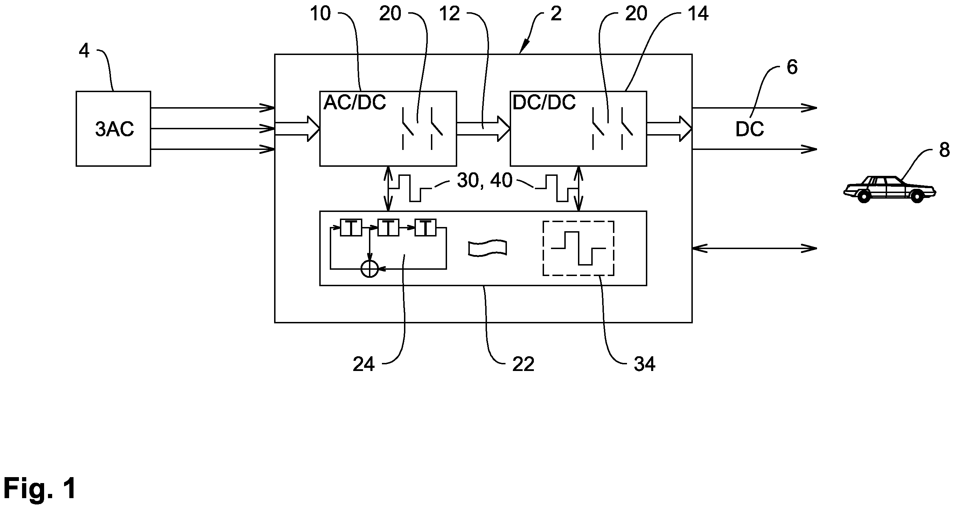

**Fig. 1** zeigt eine Architektur eines DC-Ladesystems. Eine DC-Ladestation 2 wird von einem 3AC-Stromversorgungssystem 4 gespeist und erzeugt eine DC-Ladespannung 6 zur Aufladung eines Energiespeichers eines Elektrofahrzeugs 8.

Die DC-Ladestation 2 umfasst einen AC/DC-Gleichrichter 10 zur Gleichrichtung einer von dem 3AC-Stromversorgungssystem 4 bereitgestellten Wechselspannung in eine DC-Zwischenspannung 12. Die DC-Zwischenspannung 12 wird mittels eines DC/DC-Gleichspannungswandlers 14 in die an den Energiespeicher des Elektrofahrzeugs 8 angepasste DC-Ladespannung 6 umgesetzt. Sowohl die erste als AC/DC-Gleichrichter 10 ausgeführte Stromrichterschaltung, als auch die zweite Stromrichterschaltung in Form des DC/DC-Gleichspannungswandlers 14 weisen Halbleiter-Leistungsschalter 20 auf, die jeweils mittels eines individuellen Pulsmusters 30, 40 angesteuert werden. Das jeweilige Pulsmuster 30, 40 wird von einer Steuereinheit 22 erzeugt.

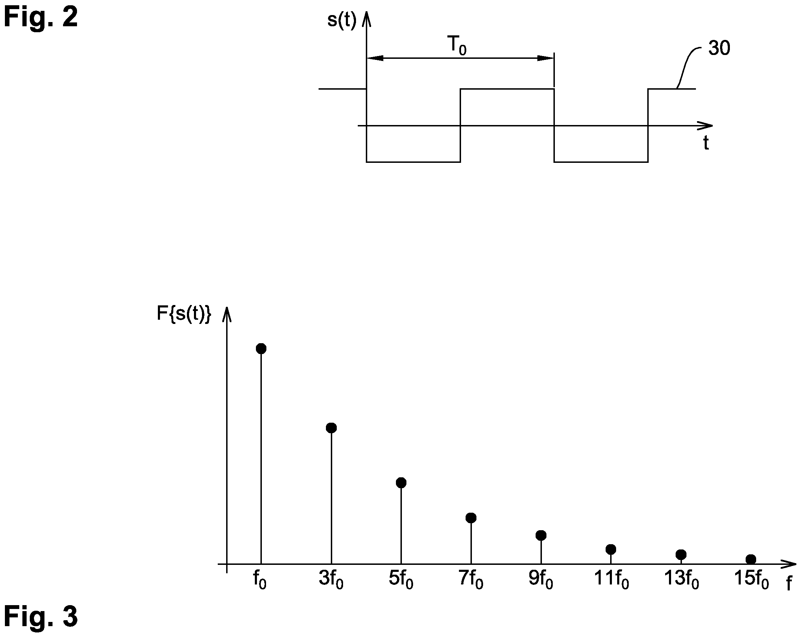

In **Fig. 2** ist ein Pulsmuster 30 in Grundform dargestellt, welches beispielsweise von einer Oszillatorschaltung als Taktgeber erzeugt wird. Das Pulsmuster 30 besteht aus einer periodischen Rechteck-Impulsfolge mit der Schaltperiode T₀. Die Grundfrequenz f₀ (Kehrwert der Schaltperiode T₀) des Pulsmusters 30 entspricht der Schaltfrequenz fₛ, mit der die Halbleiter-Leistungsschalter 20 angesteuert werden.

Das Fourier-Spektrum F{s(t)} in **Fig. 3** der periodischen Pulsmuster-Grundform 30 aus Fig. 2 spiegelt sich in einem Linienspektrum wider, welches aus Spektralanteilen an Stellen der ungeradzahligen Vielfachen der Grundfrequenz f₀ besteht.

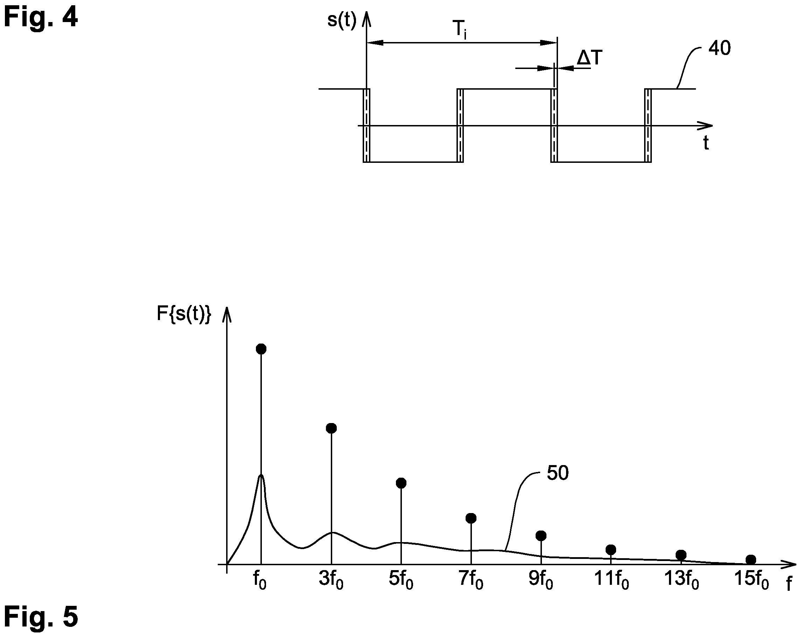

**Fig. 4** zeigt ein periodendauermoduliertes Pulsmuster 40. Durch eine zufallsgesteuerte Verlängerung und/oder Verkürzung aufeinanderfolgender Schaltperioden T₀ der Pulsmuster-Grundform 30 mittels einer positiven oder negativen Verzögerungszeit ΔT entstehen längere und/oder kürzere Schaltperioden Tᵢ. Damit variiert die der Schaltfrequenz fₛ entsprechende Grundfrequenz f₀ des die Halbleiter-Leistungsschalter 20 ansteuernden periodendauermodulierten Pulsmusters 40.

Wie **Fig. 5** zeigt, äußert sich in der spektralen Darstellung diese Verlängerung und Verkürzung aufeinanderfolgender Schaltperioden T₀ der Pulsmuster-Grundform 30 in einer gleichförmigeren Verteilung 50 der Leistungsdichte des periodendauermodulierten Pulsmusters 40 und bewirkt damit eine Reduktion der EMV-Störanteile.

Beispielhaft kann die Grundfrequenz f₀=40 kHz (Schaltfrequenz fₛ) eines Stromrichters in der DC-Ladestation 2 um +/- 500 Hz variiert werden, was periodendauermodulierten Schaltperioden Tᵢ von 24,69 µs bis 25,32 µs und einer zeitlichen Differenz zwischen kürzester und längster Schaltperiode Tᵢ von 625 ns entspricht.

Die Schaltperiode T₀ wird mit einer Folge von zufallsbestimmten Verzögerungszeiten ΔT, welche in dem hier angeführten Beispiel innerhalb der Differenz von 625 ns liegen, dynamisch von Schaltperiode zu Schaltperiode verändert. Diese Verlängerung und/oder Verkürzung der Schaltperiode T₀ der Grundform mittels der zufallsbestimmten Verzögerungszeit reduziert aufgabengemäß die Signalanteile an ungeradzahligen Vielfachen der Grundfrequenz f₀=40 kHz.

Zur Erzeugung der Folge der zufallsbestimmten Verzögerungszeiten ΔT kommt ein Zufallsgenerator 24 (Fig. 1) zum Einsatz. Dieser ist bevorzugt als Pseudo-Zufallsgenerator auf einem Mikroprozessor in der Steuereinheit 22 implementiert, wobei die Realisierung durch ein rückgekoppeltes Schieberegister oder mehrere kombinierte rückgekoppelte Schieberegister erfolgt.

Mit einer angenommenen Schwankungsbreite der Schaltfrequenz fₛ (=f₀) von 35 kHz bis 45 kHz ergibt sich eine zeitliche Differenz zwischen kürzester und längster Schaltperiode Tᵢ von 1/35 kHz - 1/45 kHz = 6.35 µs. Bei einer programmtechnischen Realisierung als rückgekoppeltes Schieberegister mit einer Periodenlänge von 1000 sind somit 1000 unterschiedliche zufallsbestimmte Verzögerungszeiten ΔT mit Werten zwischen 0 kHz und 6.35 µs möglich.

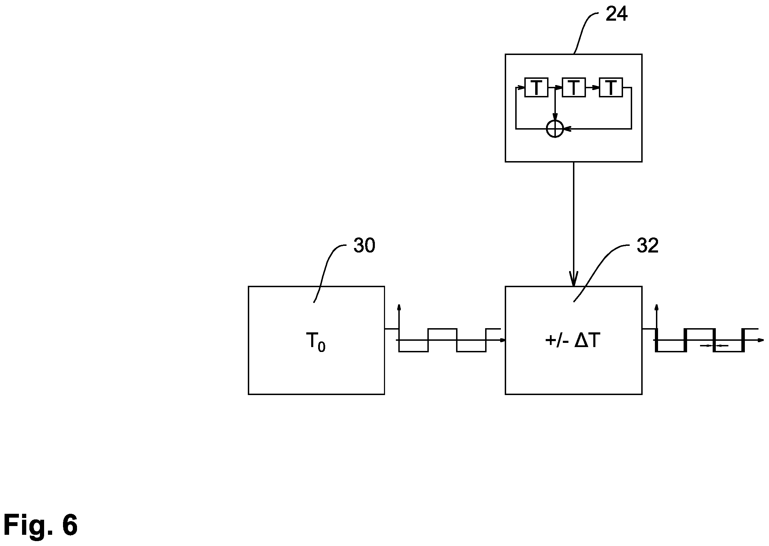

Dabei kann die Schaltfrequenz fₛ ausgehend von einem Basistakt mit der größten Schaltfrequenz fs = 45 kHz und der entsprechenden Periode 22.22 µs mittels eines Basis-Timers 30 vorgegeben werden. Die Variation der Schaltfrequenz fₛ mittels eines von dem Pseudo-Zufallsgenerator 24 gesteuerten dynamischen Verzögerungs-Timers 32 erfolgt bei jeder SchaltperiodeT₀, Tᵢ durch Addition der aktuellen zufallsbestimmten Verzögerungszeit (**Fig. 6**).

In ähnlicher Weise kann ausgehend von einem Mittelwert der Schaltfrequenz fs eine zufallsbestimmte, entsprechende Verzögerungszeit ΔT addiert und subtrahiert werden (positive oder negative Verzögerungszeit ΔT).

Alternativ ist es auch möglich, unter Verzicht auf den Verzögerungs-Timer 32 unmittelbar dem Basis-Timer 30 für jede SchaltperiodeT₀, Tᵢ eine der geänderten Schaltfrequenz fₛ entsprechende Schaltperiode Tᵢ zuzuweisen.

Statt des Basis-Timers 30 und des Verzögerungs-Timers 32 kann auch ein zufallsgesteuerter (Rechteck-)Signalgenerator 34 (Fig.1) verwendet werden, der die Schaltfrequenz fₛ in einem Bereich um die Grundfrequenz f₀ zufallsbestimmt variiert. Bevorzugt ist der zufallsgesteuerte Signalgenerator 34 auf Basis des - als IC-Baustein verfügbaren - DDS-Verfahrens in der Steuereinheit 22 zu implementieren.

## Patentansprüche

1. Verfahren zur Unterdrückung von EMV-Störungen in einer DC-Ladestation (2) für Elektrofahrzeuge (8), wobei die DC-Ladestation (2) mindestens eine Stromrichterschaltung (10, 14) mit Halbleiter-Leistungsschaltern (20) aufweist, deren Ansteuerung über ein Pulsmuster mit einer Schaltfrequenz (fₛ) erfolgt,
umfassend die Verfahrensschritte:
Bereitstellen einer Wechselspannung von einem AC-Stromversorgungssystem (4),
Gleichrichten der Wechselspannung in eine DC-Zwischenspannung (12),
Umsetzen der DC-Zwischenspannung (12) in eine DC-Ladespannung (6),
**dadurch gekennzeichnet, dass**
die Schaltfrequenz (fₛ) des Pulsmusters (30, 40) zur Ansteuerung der Halbleiter-Leistungsschalter (20) kontinuierlich und zufallsbestimmt variiert wird.

2. Verfahren nach Anspruch 1,
**dadurch gekennzeichnet,**
**dass** die Variation der Schaltfrequenz (fₛ) durch eine Verlängerung und/oder Verkürzung aufeinanderfolgender Schaltperioden (T₀, Tᵢ) mit einer zufallsbestimmten Verzögerungszeit (ΔT) erfolgt.

3. Verfahren nach Anspruch 2,
**dadurch gekennzeichnet,**
**dass** die zufallsbestimmte Verzögerungszeit (ΔT) zur Verlängerung und/oder Verkürzung der Schaltperiode (T₀) durch einen Zufallsgenerator erzeugt wird.

4. Verfahren nach Anspruch 3,
**dadurch gekennzeichnet,**
**dass** der Zufallsgenerator (24) als Pseudo-Zufallsgenerator realisiert wird.

5. Verfahren nach Anspruch 1,
**dadurch gekennzeichnet,**
**dass** die Variation der Schaltfrequenz (fₛ) mittels eines digitalen Signalgenerators (34) erfolgt.

6. Verfahren nach Anspruch 5,
**dadurch gekennzeichnet,**
**dass** der digitale Signalgenerator (34) auf Basis des DDS-Verfahrens arbeitet.

7. Anwendung des Verfahrens nach einem der Ansprüche 1 bis 6 in analoger Weise für ein Ladegerät in einem Elektrofahrzeug (8), wobei das Ladegerät mindestens eine Stromrichterschaltung (10, 14) mit Halbleiter-Leistungsschaltern (20) aufweist, deren Ansteuerung über ein Pulsmuster mit einer Schaltfrequenz (fₛ) erfolgt.
